Europäisches Patentamt

European Patent Office

Office européen des brevets

(19)

(11) **EP 0 550 426 B1**

(12) # FASCICULE DE BREVET EUROPEEN

(45) Date de publication et mention
de la délivrance du brevet:
**25.11.1998 Bulletin 1998/48**

(51) Int Cl.6: **H02H 6/00**, H02H 7/08

(21) Numéro de dépôt: **93400002.7**

(22) Date de dépôt: **04.01.1993**

(54) **Dispositif de contrôle thermique d'un moteur électrique embarqué à bord d'un véhicule, notamment pour un système de direction assistée**

Vorrichtung zur thermischen Überwachung eines Elektromotors an Bord eines Fahrzeuges, inbesondere für ein Servolenkungssystem

Device for thermal monitoring of an electric motor on board a vehicle, in particular for a power-steering system

(84) Etats contractants désignés:
**DE ES GB IT SE**

(30) Priorité: **03.01.1992 FR 9200029**

(43) Date de publication de la demande:
**07.07.1993 Bulletin 1993/27**

(73) Titulaire: **VALEO ELECTRONIQUE**
**78960 Voisins-Le-Bretonneux (FR)**

(72) Inventeur: **Desrus, Dany**
**F-75012 Paris (FR)**

(74) Mandataire: **Gamonal, Didier et al**
**Valeo Management Services**
**Propriété Industrielle**
**2, rue André Boulle,**
**B.P. 150**
**94004 Créteil (FR)**

(56) Documents cités:
**EP-A- 214 025**          **DE-A- 4 030 475**
**FR-A- 2 277 513**

- **ENERGY & AUTOMATION (SIEMENS) PRODUCT NEWS STANDARD PRODUCTS vol. 13, no. 1, 1 Janvier 1991, BERLIN, DE ARMIN FISCHER ET AL. 'Digital Motor Protection with New Thermal Replica of the Rotor Circuit'**

## Description

La présente invention, telle qu'elle est définie dans les revendications, concerne un dispositif de contrôle thermique d'un moteur électrique, notamment un moteur électrique générateur d'une énergie mécanique d'assistance de braquage pour un système de direction assistée de véhicule automobile.

Elle trouve application notamment dans un système de direction assistée.

Les moteurs électriques utilisés dans les actionneurs embarqués à bord des véhicules sont très souvent équipés de dispositifs de protection thermique qui détectent un dépassement de la température de sécurité du moteur lors de son fonctionnement.

Un tel dispositif est par exemple décrit dans le document EP-A-0 214 025 conforme au préambule de la revendication 1. Lorsqu'un dépassement de la température de sécurité du moteur est détecté, l'alimentation du moteur est coupée et une simulation approchée du refroidissement du moteur est poursuivie pendant un certain temps après la coupure de l'alimentation du moteur, afin de récupérer l'image thermique du moteur lorsque son alimentation est ultérieurement rétablie.

Cependant, l'ouverture du relais, qui connecte le moteur électrique à son alimentation, est commandée de façon brutale. Cette caractéristique est un inconvénient quand on veut éviter un choc dans l'entraînement par l'actionneur dans lequel le moteur électrique est installé. Ainsi, quand l'actionneur fonctionne de façon continue, les systèmes de contrôle thermique selon l'art antérieur introduisent une discontinuité qui déqualifie l'actionneur.

En particulier, dans un système de direction assistée électrique de véhicule automobile, les demandes de braquage des roues directrices sont interprétées selon les situations de conduite et/ ou les attitudes du véhicule, par un calculateur électronique qui contrôle l'alimentation électrique d'un moteur qui sert de source d'énergie mécanique d'assistance de braquage. Une protection thermique conforme à l'art antérieur entraînerait une rupture brutale de l'assistance de direction lorsque la température du moteur électrique atteint une valeur trop forte, et le conducteur recevrait un choc sur la colonne de direction qui serait préjudiciable.

La présente invention vise à remédier à cet inconvénient de l'art antérieur. Selon l'invention, ce but est atteint par les caractéristiques de la revendication 1.

Selon une caractéristique de l'invention, le dispositif comporte un circuit de mesure de la valeur efficace du courant traversant les enroulements du moteur qui reçoit sur une entrée le signal représentatif dudit courant.

Selon un développement de l'invention, le circuit de calcul d'une température de redémarrage lorsque le moteur électrique n'est pas en fonctionnement est activé pendant une durée prédéterminée à partir de l'arrêt du fonctionnement du moteur électrique, et le circuit de contrôle de contrôle de la température instantanée du moteur électrique lorsque celui-ci est en fonctionnement est activé dès la demande de mise en fonctionnement du moteur de façon à protéger le moteur électrique dès sa mise en fonctionnement.

Selon un mode de réalisation de l'invention, le moyen générateur d'une gradualité du circuit de pilotage comprend :

- un circuit générateur d'un coefficient de gradualité telle qu'une rampe descendante lorsqu'un signal d'arrêt est reçu, ou ascendante lorsqu'un signal de redémarrage est reçu ;
- un circuit générateur d'un signal de pilotage ;
- un multiplieur dont une première entrée est connectée à la sortie du moyen générateur d'une gradualité, dont une seconde entrée est connectée à la sortie du circuit générateur d'un signal de pilotage, et dont la sortie est connectée à l'entrée d'un circuit d'alimentation de puissance du moteur électrique.

Selon un avantage de l'invention, le moteur électrique est graduellement mis hors fonction et/ou en fonctionnement, en sorte que les chocs sur la colonne de direction à la désactivation et à la réactivation de l'assistance sont évités.

D'autres avantages et caractéristiques de la présente invention seront mieux compris à l'aide de la description et des dessins qui sont :

- la figure 1 : une représentation schématique du système thermique constitué par le moteur électrique et son environnement ;
- la figure 2 : un graphe représentant les échanges thermiques du système thermique selon l'analyse de l'invention ;
- la figure 3 : un graphe représentatif de la loi de refroidissement du moteur selon l'analyse de l'invention ;
- les figures 4 à 6 : un schéma d'un mode de réalisation d'un circuit électronique permettant de déterminer une température de redémarrage du moteur, ainsi que deux graphes pour expliquer son fonctionnement ;
- les figures 7 et 8 ; deux modes de réalisation d'un contrôleur thermique selon l'invention destiné à exécuter la partie de contrôle thermique du moteur électrique alimenté ;
- les figures 9 et 10 : un schéma d'un mode de réalisation d'un circuit de mesure de la température ambiante ainsi qu'un graphe représentatif du signal de mesure en fonction de la température ambiante ;
- la figure 11 : des diagrammes de fonctionnement d'un mode de réalisation d'un contrôleur thermique selon l'invention permettant de réaliser une hystérésis lors du réenclenchement de l'alimentation du moteur électrique après dépassement d'une température limite de fonctionnement ;

- la figure 12 : un schéma d'un mode de réalisation d'un contrôleur thermique fonctionnant avec une hystérésis de réenclenchement ;
- la figure 13 : un schéma d'un mode de réalisation d'un système de direction assistée ;
- la figure 14 : un schéma d'un mode de réalisation d'un contrôleur doté de moyens destinés à fournir une gradualité dans l'application des ordres de protection thermique issus du contrôleur de l'invention ;
- la figure 15 : des diagrammes d'un cycle de fonctionnement du système de la figure 14.

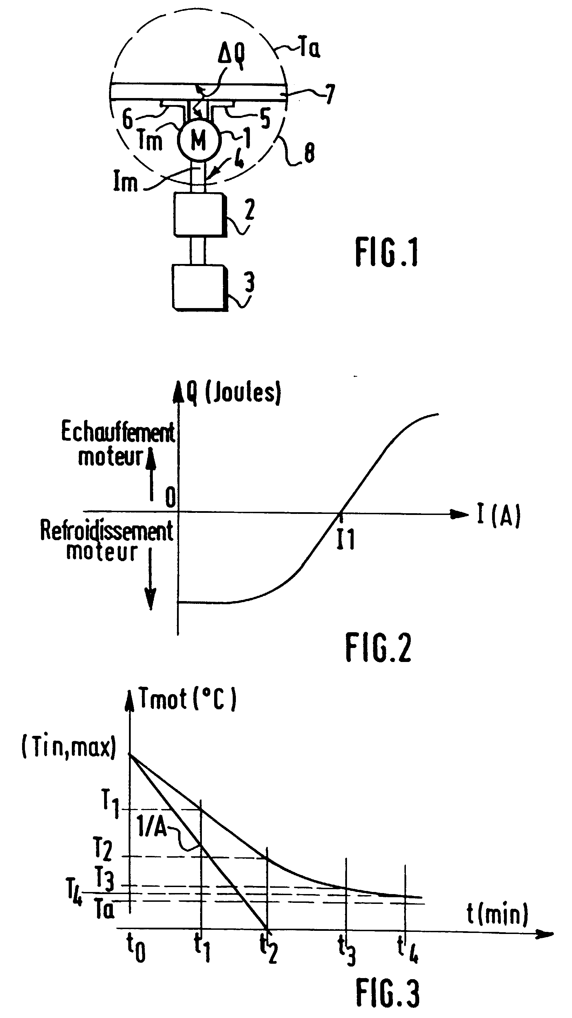

A la figure 1, on a représenté un système thermique constitué par le moteur électrique et son environnement. Cet environnement peut être celui d'un véhicule. Le moteur peut y être disposé dans des zones dont l'état thermique varie de façons différentes. En effet, le moteur électrique peut être disposé dans le compartiment dans lequel est disposé le moteur de propulsion du véhicule et où règne une température et des échanges thermiques très importants. Il peut être disposé dans l'habitacle du véhicule où les échanges sont plus mesurés, notamment quand l'habitacle est climatisé.

Le moyen de l'invention permet de s'adapter à ces différentes situations.

Le moteur électrique 1 est relié par des fils électriques 4 à un contrôleur d'alimentation 2 qui lui transmet de l'énergie électrique provenant d'une source d'énergie électrique 3 selon des lois de fonctionnement qui ne sont pas directement concernées par la présente invention et ne seront pas décrites plus avant.

Le moteur électrique 1 est monté par des supports 5 et 6 conducteurs de la chaleur, sur une structure 7 comme le chassis du véhicule. L'ensemble constitue l'environnement thermique de fonctionnement du moteur électrique, environnement qui comporte en particulier les veines d'air de refroidissement, etc. Le moteur 1 présente une température $Tm$ tandis que l'environnement 8 présente une température ambiante $Ta$. Les échanges thermiques sont représentés par $Q$.

On conçoit qu'une analyse rigoureuse des échanges thermiques conduirait en théorie à un contrôle thermique parfait. Un tel contrôle thermique qui se fonderait sur la connaissance des résistances thermiques entre les différentes parties du système thermique et sur la mesure des échanges sur chaque voie d'échange thermique permettrait d'atteindre un tel résultat.

Cependant, l'invention propose un moyen moins coûteux en puissance de calcul et qui permet d'adapter facilement l'invention à des environnements très variés.

L'invention part d'une analyse mieux adaptée à sa réalisation fiable avec des moyens peu coûteux. En effet, le moteur électrique 1 présente des caractéristiques déterminées par avance au point de vue thermique. En particulier, une fois installé dans le véhicule, il supporte une température ambiante maximale donnée. En fonction du courant moteur qui le traverse, la température du moteur augmente. Or, cette élévation de température doit être limitée à une valeur admissible, notamment pour des raisons de tenue mécanique.

A la figure 2, on a représenté une courbe représentative des échanges thermiques $Q$ (en ordonnées) en fonction du courant traversant le moteur électrique $Im$ (en abscisses) pour des intervalles de temps prédéterminés et dans un environnement donné. Quand le courant moteur $Im$ est inférieur à une valeur d'équilibre thermique $I1$, le moteur électrique cède sa chaleur au milieu ambiant.

Quand le courant moteur $Im$ dépasse la valeur d'équilibre $I1$, le moteur s'échauffe. De ce fait, sa température interne $Tm$ augmente et peut atteindre selon les conditions thermiques une température dépassant sa température maximum admissible. Dans la pratique, pour un moteur à courant continu de puissance électrique inférieur au kilowatt, cette température maximum admissible est de l'orde de 150°C déterminée par la tenue de l'isolant des fils du bobinage source de chaleur dans le moteur électrique.

A la figure 3, on a représenté le refroidissement du moteur quand il cesse d'être alimenté. Quand le courant moteur est nul, le moteur électrique cède sa chaleur au milieu ambiant selon une loi exponentielle avec une constante de temps qui dépend de paramètres locaux. On a représenté en ordonnées la température du moteur, et en abcisses, le temps écoulé depuis la coupure de l'alimentation électrique en minutes.

Le refroidissement du moteur présente une constante de temps de refroidissement du moteur dans son environnement qui est connue par avance. La variation de température du moteur est directement liée à la durée de refroidissement par une relation de la forme :

$$Tm - Ta = K \exp[- (1/A) (t- t0)] \tag{1}$$

où $K$ est une constante caractéristique du système constitué par le moteur électrique et son ambiance, $A$ est la constante de temps de refroidissement, $t0$ est la date de début de refroidisement, $t$ est la date en cours, $Tm$ la température instantanée du moteur électrique en cours de refroidissement et $Ta$ est la température ambiante instantanée.

La température du moteur électrique part de la valeur (Tm, max) à la date t0. Cette valeur est la dernière valeur estimée lors de la partie de contrôle thermique, qui sera décrite plus loin, et enregistrée dans une mémoire de travail convenable, ladite mémoire de travail étant au moins pour l'adresse contenant la température (Tm, max) sauvegardée à la coupure de l'alimentation électrique.

A et K sont des valeurs obtenues par mesures préalables sur le moteur électrique, en fonction du véhicule et de la place dans le véhicule dans lequel il est destiné à être monté.

D'autres lois de refroidissement peuvent être exploitées selon les cas et les technologies de moteurs électriques ainsi que selon leur environnement.

Dans l'analyse qui précède, on constate que l'invention comporte deux phases distinctes. Dans une première phase, le moteur est alimenté et son bilan thermique est surveillé de façon à empêcher qu'une température maximale admissible soit dépassée ainsi qu'il sera décrit plus loin. Dans une seconde phase, le moteur électrique se refroidit pendant une durée qui dépend de la température maximum (Tm, max) atteinte par le moteur et de ses caractéristiques K et A, et de la température ambiante Ta.

Selon l'invention, si le moteur électrique démarre à nouveau avant que la température ambiante soit atteinte par le moteur, le contrôleur thermique de l'invention utilise comme première valeur de la température moteur Tm la valeur atteinte à cet instant de redémarrage lors du refroidissement. Pour un moteur donné, cette température de redémarrage est connue par la durée de refroidissement, c'est à dire la durée pendant lequel le moteur n'est pas alimenté.

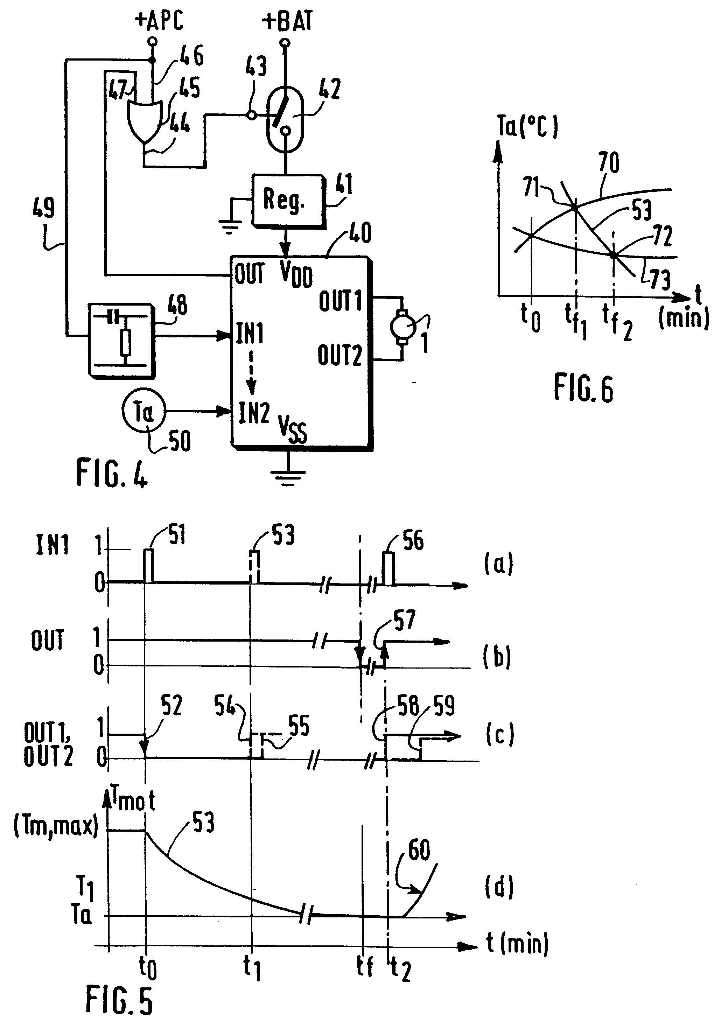

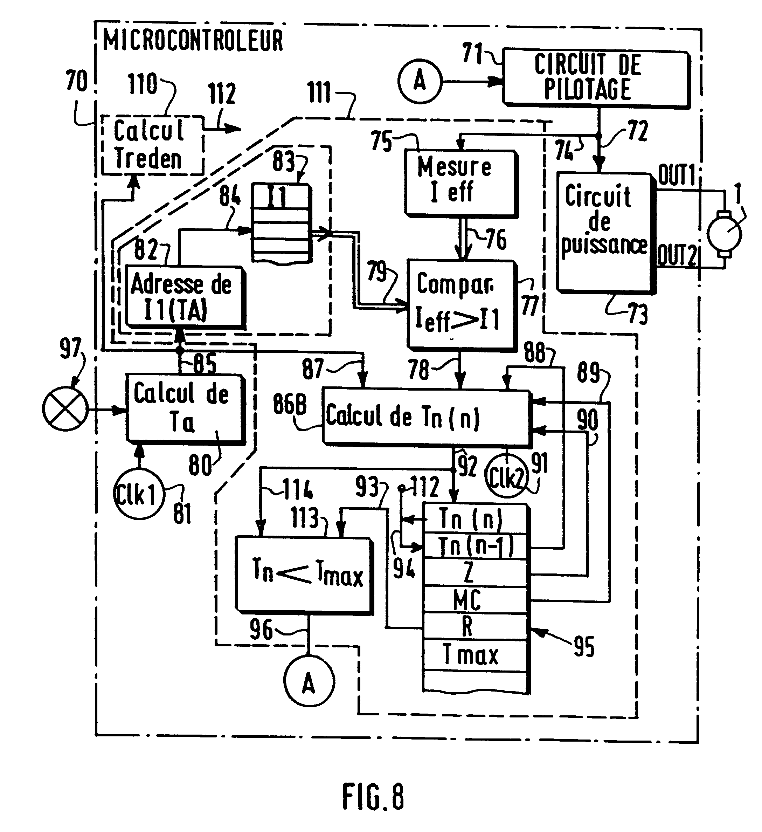

A la figure 4, le circuit électronique permettant de déterminer une température de redémarrage du moteur comporte principalement le contrôleur thermique 40 qui est alimenté par l'intermédiaire d'un circuit générateur 41 d'une tension régulée Vdd connecté à la borne de tension positive +BAT de la batterie du véhicule par l'intermédiaire d'un interrupteur commandé 42.

L'interrupteur commandé peut être un transistor de commutation ou un relais. Il peut être du type monostable ou bistable ainsi qu'il est connu.

Le circuit électronique permettant de déterminer une température de redémarrage du moteur comporte aussi une porte OU logique 45 dont une première entrée 46 est connectée à la ligne +APC d'alimentation commandée ou de requête de fonctionnement du moteur électrique 1, ledit moteur électrique 1 étant connecté entre les bornes de sortie programmées OUT1 et OUT2 du contrôleur 40. Une seconde entrée 47 de la porte OU 45 est connectée à une sortie programmée OUT du contrôleur 40 et dont la sortie est haute tant que le contrôleur est dans une phase de surveillance thermique.

La première entrée 46 de la porte OU 45 est aussi connectée par une ligne 49 à l'entrée d'un circuit 48 détectant le changement d'état de la ligne +APC. La sortie du circuit 48 est connectée à une entrée d'analyse IN1 du contrôleur dans lequel un programme scrute les entrées de façon à exécuter les traitements prédéterminés.

La sortie 44 de la porte OU 45 est connectée à la borne de commande 43 de l'interrupteur commandé 42.

Quand la ligne +APC est désactivée à l'instant t0, par exemple après coupure de l'alimentation générale du véhicule quand le conducteur a tourné la clé de contact, ou quand la fonction appelante de puissance motrice générée par le moteur 1 demande une cessation de l'alimentation du moteur 1, l'entrée 46 de la porte OU 45 passe à "0". Mais la seconde entrée 47 reste au niveau "1", car le contrôleur 40 est programmé pour maintenir sa sortie OUT à "1" tant que la phase de surveillance thermique n'est pas terminée, c'est à dire, tant que la température moteur n'a pas atteint la valeur Ta de la température ambiante.

A la figure 5, on a représenté des graphes (a), (b), (c) et (d) de fonctionnement du contrôleur lors de cette phase de surveillance thermique pendant l'arrêt du moteur.

A l'instant t0, une impulsion 51 a lieu sur l'entrée IN1, la sortie OUT restant à "1". Les sorties de puissance OUT1 et OUT2, entre lesquelles le moteur 1 est connecté, sont donc interrompues (fronts descendants 52 du graphe (c) de la figure 5) par le contrôleur 40.

Le refroidissement du moteur représenté au graphe (d) de la figure 5 commence. Ce refroidissement est simulé dans le contrôleur 40 par une boucle de calcul qui exécute, en fonction du temps indiqué par une horloge interne au contrôleur et non représentée, le calcul de la température Tm estimée du moteur lors de son refroidissement selon la relation (1) précitée par :

$$Tm = Ta - K \exp[- (1/A) (t - t0)] \qquad (1')$$

La valeur (Tm, max) correspond à la température atteinte par le moteur à la date t0. La courbe de refroidissement 53 du graphe (d) de la figure 5 est identique à celle de la figure 3 et ne sera pas plus décrite.

Si la ligne +APC change d'état avant que la température ambiante Ta ne soit atteinte, par exemple à la date tl (impulsion 53 sur la ligne (a)), selon les conditions de redémarrage pré-enregistrées dans le contrôleur, la température atteinte par le moteur est T1 qui est supérieure à la température ambiante.

Dans un mode de réalisation, la température ambiante est mesurée par une sonde de mesure 50 (figure 4) dont la sortie émet un signal de mesure fourni à une entrée IN2 du contrôleur 40 qui numérise et stocke périodiquement cette donnée dans une adresse d'une mémoire de travail (non représentée) du contrôleur 40. Cette adresse sera lue lors de la phase de contrôle thermique, le moteur électrique 1 étant alimenté et qui sera expliqué plus loin.

La sonde de température ambiante 50 doit être lue en permanence pendant la phase de surveillance thermique, même pendant le simple refroidissement du moteur électrique, car selon les sources de chaleur liées directement ou non à l'environnement du moteur (soleil, moteur thermique, etc...) cette température ambiante peut évoluer dans des proportions importantes.

A la figure 6, on a représenté deux cas 70 et 73 de variations de la température ambiante. La courbe 53 de refroidissement du moteur peut donc couper en 71 ou 72 à des instants différents, la courbe d'évolution 70 ou 73 de la température ambiante, instants tf1 ou tf2 qui déterminent l'arrêt de la surveillance thermique.

Le contrôleur 40 active ses sorties OUT1, OUT2 par des fronts montants, directement 54 au moment t1 de requête 53 ou avec un retard 55 dû au programme de contrôle thermique selon des critères pré-enregistrés notamment dans le programme de pilotage de l'actionneur.

A partir de l'instant tf (voir (d) de la figure 5), la température du moteur Tm est considérée comme égale à la température ambiante Ta. Le contrôleur 40 compare en permanence le contenu de l'adresse précitée de sa mémoire de travail dans laquelle est enregistrée la valeur en cours de la température ambiante Ta à la valeur calculée T de la température moteur sur la base de la relation (1') précitée. Quand les deux valeurs Tm et Ta sont égales, à la précision de calcul près, le contrôleur 40 décide alors de mettre sa sortie OUT à "0", ce qui a pour effet de faire retomber la sortie 44 de la porte OU 45 à "0". De ce fait, la borne 43 de l'interrupteur commandé 42 n'étant plus alimentée, l'interrupteur commandé 42 étant du type monostable, il s'ouvre coupant l'alimentation +BAT du circuit régulateur 41 et donc du contrôleur.

Si à une date ultérieure t2, qui peut être très éloignée de la date tf, la ligne +APC change à nouveau d'état pour demander de la puissance motrice au moteur 1, sa température Tm étant redevenue égale à la température ambiante Ta, la première entrée 46 de la porte OU 45 repasse à "1" ce qui entraîne le changement d'état de la sortie 45. Ce changement d'état ferme l'interrupteur commandé 42 qui active le circuit régulateur 41 qui démarre l'alimentation du contrôleur 40. Le programme de surveillance thermique enregistré dans le contrôleur 40 démarre, en mettant la sortie OUT au niveau haut (front 57). D'autre part, le programme du contrôleur thermique exécute sa partie de gestion électrique de l'alimentation OUT1, OUT2 du moteur électrique 1 en mettant ces deux sorties à des états hauts convenables (fronts montants 58 directs ou 59 retardés selon le programme de pilotage de l'actionneur).

La température du moteur Tm prend alors une courbe ascendante 60 ((d) de la figure 5) à cause du fait qu'un courant circule dans ses enroulements. On passe dans l'autre phase de contrôle thermique du moteur électrique alimenté qui sera décrite ci après.

L'inventeur a mené une analyse thermique des phénomènes relatifs à l'échauffement et a montré que l'analyse ci-après était vérifié par des mesures simples.

Quand le moteur électrique est alimenté par une source de tension, par exemple par les sorties programmées OUT1 et OUT2 d'un contrôleur comme le contrôleur 40 de la figure 4, la source principale génératrice de chaleur interne au moteur électrique dégage une puissance électrique de la forme :

$$Pg = Z.(Ieff)^2 \qquad (2)$$

où Z est un paramétre analogue au module de l'impédance équivalente du moteur (partie dissipatrice de chaleur) et (Ieff) est l'intensité efficace du moteur électrique.

L'environnement joue le rôle d'un milieu dissipatif de chaleur. Sa puissance de dissipation sera de la forme :

$$Qd = Mc.dT + Q0 \qquad (3)$$

où M est la masse équivalente susceptible d'absorber de la chaleur, c est la chaleur spécifique par unité de masse et dT est l'élévation de température de la masse M pendant une unité de temps et Q0 est la puissance dissipable par l'environnement des enroulements avant leur élévation de température dT. La puissance dissipable Q0 est exprimée par une relation :

$$Q0 = R. (Tm - Ta) \qquad (4)$$

où R est un coefficient radiatif, et Tm et Ta ont déjà été explicités.

On sait que l'on peut égaler les deux quantités puisque le système constitué par le moteur et son environnement est un système fermé :

$$Z.(Ieff)^2 = Mc.dT + Q0 \qquad (5)$$

On voit donc que la valeur dT peut augmenter plus ou moins vite en fonction de la valeur efficace du courant.

On remarque que pour dT = 0, qui correspond à l'équilibre thermique du système (voir figure 2), on trouve un courant d'équilibre Il donné par la relation :

$$(I1)^2 = Q0/ Z \qquad (6)$$

Dans le contrôleur de l'invention, un circuit calcule la valeur instantanée Tm(n) de la température moteur, en tenant compte du fait que pendant une durée s correspondant à l'échantillonnage réalisé naturellement par le programme enregistré dans le contrôleur on a :

$$dT = (Tm(n) - Tm(n - 1))/ s \qquad (7)$$

où on a défini la date t par la relation :

$$t = t0 + n.s \qquad (8)$$

En remplaçant dans la relation (5), il vient :

$$Z. (Ieff)^2 =$$

$$Mc. (Tm(n) - Tm(n -1))/ s + R. (Tm(n) - Ta) \qquad (9)$$

qui permet de calculer de manière générale la valeur instanée Tm(n) en fonction de la valeur précédente, de la valeur efficace du courant et de la température ambiante à l'instant n :

$$Tm(n) = (B.Tm(n - 1) + R.Ta - Z. (Ieff)^2)/ B \qquad (10)$$

avec B = Mc/ s.

Les valeurs B, s, R et Z sont enregistrées et/ ou connues au préalable. Les valeurs Ta et Ieff sont calculées sur des périodes données, qui peuvent être différentes de la période s. La valeur Tm(n - 1) correspond à la valeur précédente de la température moteur enregistrée dans la mémoire de travail.

Lors de l'initialisation de la partie 111 de contrôle thermique du moteur électrique alimenté, la valeur Tm(n - 1) est en fait constituée par la valeur de redémarrage définie précédemment lors de la phase de refroidissement exécutée par la partie 110 de calcul de la valeur de redémarrage Tredem dite aussi partie 110 de surveillance thermique de refroidissement. La température Tredem est égale à la température de refroidissement du moteur.

Si la période de refroidissement a été suffisamment longue, la température de redémarrage Tredem est, on le sait, égale à la température ambiante (voir figure 3).

Avant que la température de redémarrage soit égale à Ta, elle est calculée par le circuit de la figure 4.

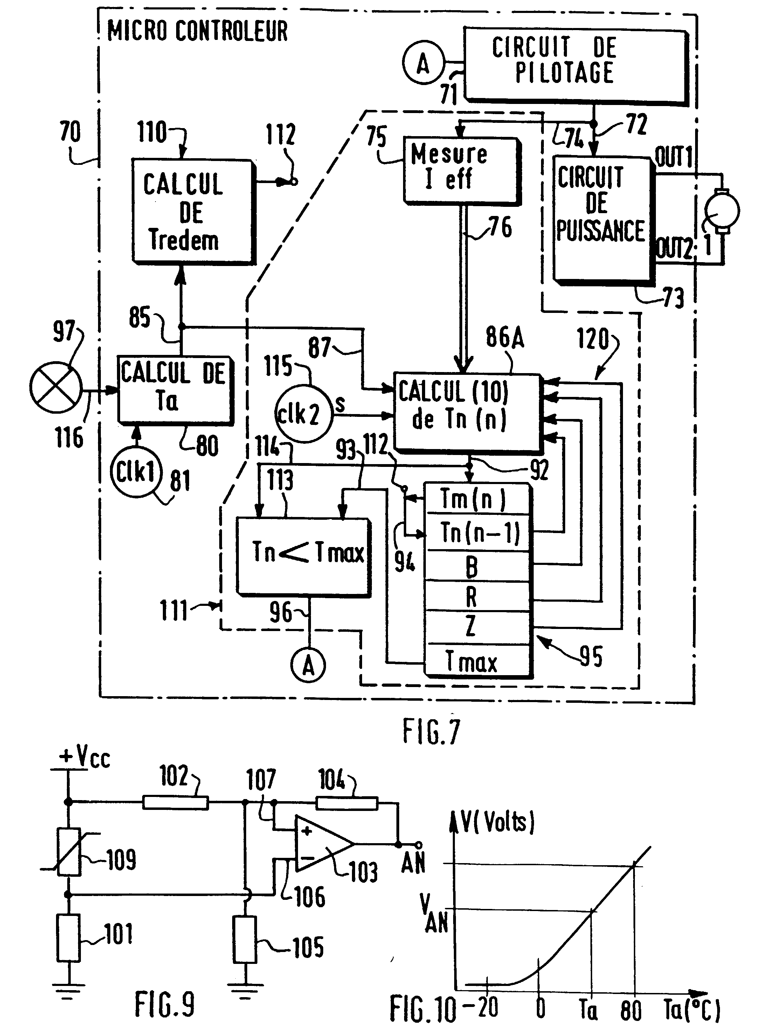

A la figure 7, on a représenté un mode de réalisation d'un tel contrôleur 70 qui peut être complété autant que de besoin par le circuit 110 déjà décrit dans le mode de réalisation de la figure 4.

Le contrôleur 70 comporte un circuit de pilotage 71 qui exécute un programme de pilotage de façon à produire un signal de pilotage 72 d'un circuit de puissance 73 qui comporte deux sorties OUT1 et OUT2 déjà décrites précédemment et aux bornes desquelles est connecté le moteur électrique 1.

Le circuit de contrôle thermique de l'invention comporte au moins une mémoire de travail 95 dans des adresses de laquelle sont inscrites :

- la valeur Tmax du maximum admissible pour la température du moteur Tm ;
- la valeur de la température moteur Tm(n -1) à l'instant précédent ;
- les valeurs pré-établies B, Z et R décrites avec la relation (10) ci-dessus.

Le circuit de contrôle thermique comporte un circuit 75 de calcul de la valeur efficace du courant moteur 1.

Dans un mode de réalisation non représenté, le circuit de calcul de la valeur efficace du courant moteur comporte un moyen de mesure du courant instantanée traversant les enroulements du moteur 1. La sortie du moyen de mesure du courant est transmise à un intégrateur de la valeur quadratique de ce signal de mesure sur une période de temps prédéterminée (par exemple de trente secondes).

Dans un autre mode de réalisation, la valeur efficace est directement dérivée par une table de correspondance préenregistrée dans le circuit 75 dont les adresses sont sélectionnées par une entrée 74 connectée à la sortie 72 du circuit de pilotage et qui exploite la valeur du signal de pilotage fournie au circuit de pilotage 73.

La sortie 76 du circuit 75 est connectée à une entrée d'un circuit 86A de calcul de la valeur instantanée Tm(n) de la température moteur en utilisant la relation (10). Ce circuit comporte des entrées 120 connnectées à des adresses de la mémoire de travail 95 pour fournir les valeurs Tm(n - 1), B, R et Z, déjà explicitées.

D'autre part, le circuit 86A reçoit la valeur en cours Ta produite par un circuit 80 de la température ambiante Ta.

D'autre part, le circuit 111 comporte une horloge 115 qui émet un signal s correspondant ou représentatif de la durée d'évolution de la température dT déjà explicitée dans la relation 10 mise en oeuvre dans le circuit 86A.

Le circuit 86A comporte une sortie 92 qui produit une valeur numérique Tm(n) de la température moteur instantanée calculée, qui est enregistrée dans une adresse correspondante de la mémoire de travail 95.

Avant l'exécution de l'étape de calcul ultérieur n + 1, l'adresse de la mémoire 95 qui contenait la valeur précédente Tm(n - 1) est remise à jour par la valeur Tm(n). Lors de la première exécution du calcul de Tm(n), l'adresse contenant la valeur précédente Tm(n - 1) est remise à jour à l'aide de la valeur Tredem produite à une sortie 112 du circuit 110 de calcul de la valeur Tredem de la température de redémarrage du moteur, circuit 110 décrit précédemment.

Le circuit 80 de calcul de la valeur de la température ambiante Ta reçoit par une entrée 116 le signal de sortie d'une sonde 97 de mesure de la température ambiante. Le circuit 80 fonctionne à l'aide d'une horloge 81 dont la période peut être différente de la période s de l'horloge 115 précitée.

La sortie 85 du circuit 80 est fournie d'une part à une entrée du circuit 110 et d'autre part à une entrée convenable 87 du circuit 86A.

L'entrée 114 d'un comparateur 113 est connectée à la sortie 92 du circuit 86A de calcul de la température moteur instantanée Tm(n). Ce comparateur présente une seconde entrée 93 connectée à une adresse de la mémoire de travail 95 dans laquelle est enregistrée préalablement la valeur Tmax maximum admissible de la température moteur. Le comparateur 113 exécute la comparaison entre les valeurs Tm(n) et Tmax de telle sorte que sa sortie 96 génère un signal d'arrêt A transmis à une entrée convenable du circuit de pilotage 71.

Quand la température instantanée dépasse le seuil Tmax, le programme de pilotage du circuit 71 déctecte le signal d'arrêt et le traite d'une façon qui dépend de l'actionneur comme il sera vu plus loin.

A la figure 8, on a représenté un autre mode de réalisation d'un contrôleur 70 selon l'invention. Les éléments semblables au mode de réalisation de la figure 7 portent les mêmes numéros de référence et ne seront pas plus décrits.

Dans le mode de réalisation de la figure 8, la sortie 76 du circuit 75 de mesure de la valeur efficace Ieff est fournie à une première entrée d'un comparateur 77.

La seconde entrée 79 du comparateur présente une valeur égale au courant d'équilibre I1 fournie par un moyen de calcul 82-84 du courant d'équilibre défini selon la relation (6).

La valeur I1 dépend de la température ambiante Ta fournie par une sortie 85 du circuit 80. Cette valeur Ta est fournie à l'entrée d'un circuit 82 générateur d'une adresse dans laquelle on doit lire dans une mémoire pré-enregistrée 83 la valeur d'équilibre I1 pour la température Ta donnée.

D'autre part, le comparateur 77 comporte une sortie de comparaison 78 qui indique si le courant efficace Ieff est plus grand que le courant d'équilibre I1. Si la comparaison est positive, la température instantanée Tm(n) du moteur est produite par le premier terme de la relation (9) :

$$Z.\,(Ieff)^2 = Mc.(Tm(n) - Tm(n - 1))/\,s \qquad\qquad (9bis)$$

Dans le cas contraire, la température instantanée Tm(n) du moteur est produite par le second terme de la relation (9) :

$$Z.\,(Ieff)^2 = R.\,(Tm(n) - Ta) \qquad\qquad (9ter)$$

La sortie 78 du comparateur 77 valide deux organes de calcul préprogrammés selon les relations 9bis et 9ter de façon à produire sur la sortie 92 la nouvelle valeur Tm(n) de la température instantanée du moteur.

Le circuit 86B comporte des entrées respectivement 88, 89, 90 qui reçoivent les valeurs Tm(n - 1), Z et Mc ou R, enregistrées dans la mémoire de travail 95.

A la figure 9, on a représenté un mode de réalisation d'un circuit 80 de calcul de la température ambiante Ta.

La sonde de mesure de la température ambiante comporte une thermistance 109 connectée par une première borne à une source d'alimentation positive +Vcc et par une seconde borne à une source d'alimentation négative comme la masse par l'intermédiaire d'une résistance 101. Le point commun entre la thermistance et la résistance 101 est fourni à une entrée inverseuse 106 d'un amplificateur opérationnel 103. La première borne de la thermistance est connectée par l'intermédiaire d'une résistance 102 à une entrée non inverseuse 107 de l'amplificateur 103. L'entrée non inverseuse 107 est connectée à la masse par une résistance 105 et à la sortie AN de l'amplificateur 103 par une résistance 104.

A la figure 10, on a représenté la tension de sortie V en fonction de la température ambiante Ta. Dans un exemple de réalisation on a obtenu une caractéristique sensiblement rectiligne entre 0° et 80°.

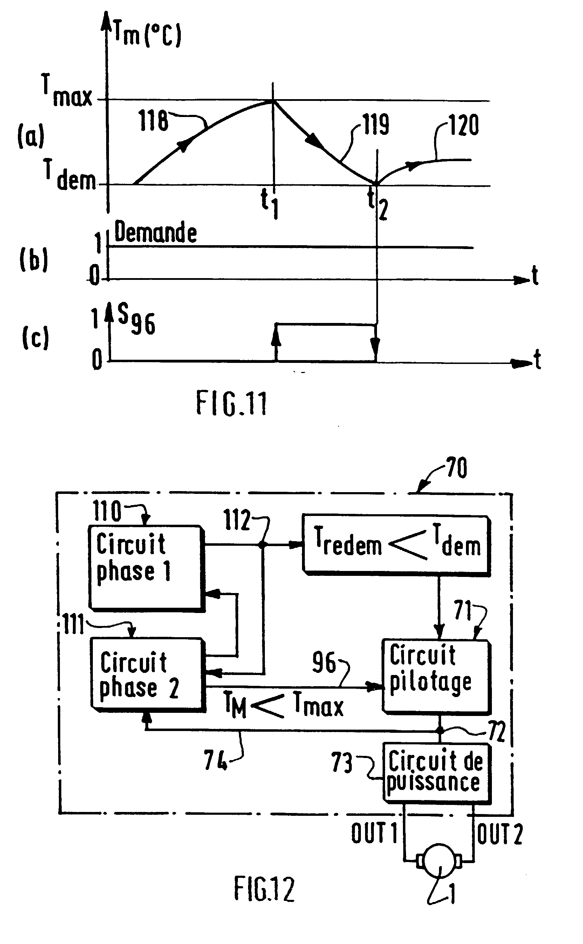

A la figure 11, on a représenté trois diagrammes de fonctionnement d'un mode de réalisation d'un contrôleur 70. Quand la température Tm augmente lors du fonctionnement du moteur électrique, selon la courbe 118, on atteint à l'instant t1 la température Tmax maximum admissible. Au diagramme (b), la fonction de demande de fonctionnement fournie au circuit de pilotage 71 n'est pas interrompue à cet instant. Cependant, le signal d'arrêt 96, représenté au diagramme (c) de la figure 11, passe au niveau haut "1" par un front montant. Ce signal est reçu sur l'entrée A du circuit de pilotage 71. Il est traité par le programme de pilotage de l'actionneur qui y est enregistré et qui peut par exemple interrompre l'alimentation OUT1, OUT2 du moteur 1 pour réaliser la protection thermique. Dans ce cas, la température Tm du moteur suit une pente de refroidissement 119 qui est suivie par le circuit 110 du contrôleur 70. Quand la température du moteur passe par la valeur Tdem définie au préalable le contrôleur 70 désactive la sortie 96 qui retombe à l'état bas "0" à l'instant t2. Le circuit 110 fournit par l'entrée 112 une valeur de redémarrage Tdem au circuit 111 et le circuit de pilotage 71 active à nouveau le circuit de puissance 73 qui alimente à nouveau OUT1, OUT2, le moteur 1. Celui-ci peut à nouveau fonctionner et sa température s'élève à nouveau selon la courbe 120 du diagramme (a) de la figure 11.

A la figure 12 on a représenté un mode de réalisation schématique d'un contrôleur 70 qui permet d'exécuter un tel fonctionnement à hystérésis selon lequel, après avoir atteint la température maximum admissible Tmax, le moteur redémarre à partir d'une température inférieure Tdem.

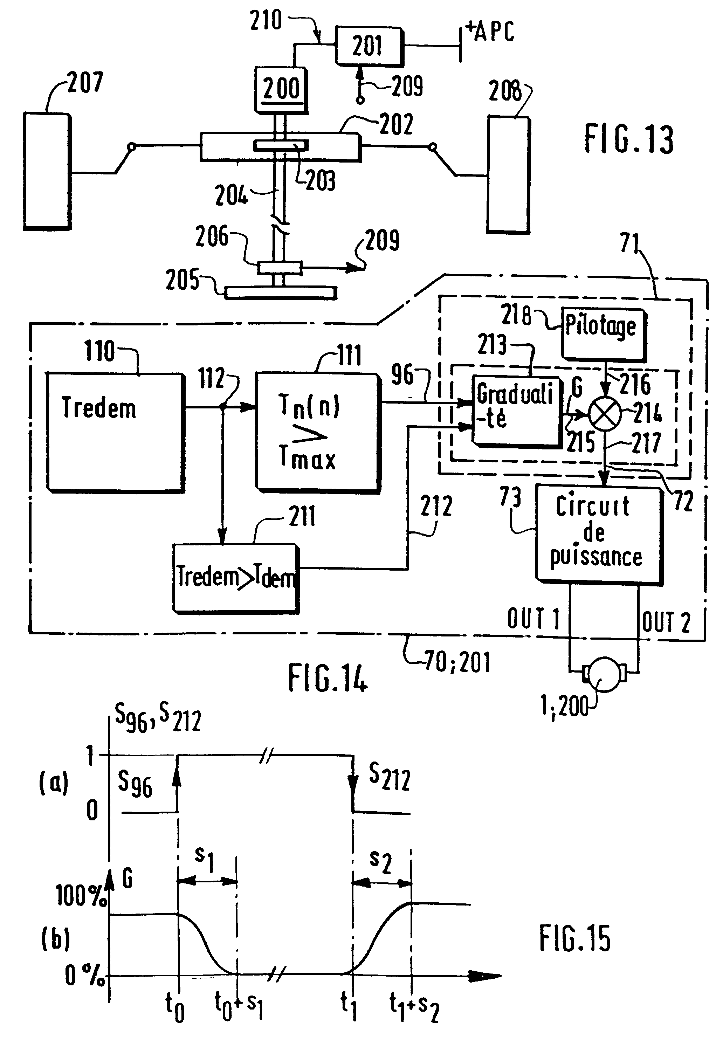

A la figure 13 on a représenté un mode de réalisation d'un système de direction assistée des roues directrices 207, 208 d'un véhicule.

Le système de direction assistée comporte un moteur 200 alimenté par l'intermédiaire d'un contrôleur 201, incorporant la protection thermique décrite précédemment, par une source d'alimentation +APC.

Le moteur fournit sa puissance motrice par un organe d'accouplement 203 comme un pignon denté, à un organe de braquage 202 comme une crémaillère de direction.

L'organe de braquage 202 est connecté aux roues directrices 207 et 208 et reçoit aussi un couple de braquage par une colonne de direction 204 manoeuvrée par un conducteur à l'aide d'un volant 205.

Ainsi qu'il est connu, un organe 206 comme un capteur de couple produit par une sortie 209 un signal d'actionnement reçu par le contrôleur 201. La sortie 210 du contrôleur 201 active alors le moteur 200.

A la figure 14 on a représenté une partie du contrôleur 70 ou 201, dotée de la protection thermique 110, 111 décrite précédemment, et qui comporte aussi un moyen générateur de gradualité lors du changement d'état du signal d'arrêt 96 émis par le circuit 111 sur le circuit de pilotage 71.

Comme on l'a décrit précédemment, le contrôleur peut être doté du système à hystérésis 211 qui produit un signal 212 de réactivation du fonctionnement du moteur. Les signaux 96 d'arrêt et 212 de réactivation sont fournis à un circuit 213 générateur d'un coefficient de gradualité G qui est fourni à une première entrée 215 d'un multiplicateur 214. Une seconde entrée 216 du multiplicateur 214 reçoit la sortie d'un circuit 218 générateur d'un signal de pilotage.

Le multiplicateur 214 comporte une sortie 217 connectée à l'entrée 72 du circuit 73 d'alimentation de puissance OUT1, OUT2, du moteur 1 ; 200.

A la figure 15, on a représenté un diagramme (a) du changement d'état des lignes 96 et 212 connectées au circuit 213 générateur de gradualité.

Au diagramme (b) de la figure 15, on a représenté l'évolution du coefficient G de gradualité appliqué à l'entrée 215 du multiplicateur 214.

Quand le signal d'arrêt S96 passe de "0" à "1", le coefficient de gradualité passe continûment de 100 % à 0 %, selon une rampe préprogrammée du circuit 213, à partir de l'instant t0 de transition de S96, pendant une durée sl prédéterminée.

A partir de l'instant t0 + sl, le signal de sortie 217 fourni à l'entrée 72 du circuit de puissance 73 est nul. De ce fait le moteur est alimenté de façon graduelle et non pas de façon brutale, qui, dans le cas d'un actionneur comme celui d'un système de direction assistée, serait générateur d'un choc désavantageux.

Quand le signal S212 de réactivation apparaît (front descendant à l'instant tl au diagramme (a) de la figure 15, le coefficient G de gradualité passe de 0 à 100 % selon une rampe ascendante pré-enregistrée dans le circuit 213 générateur de gradualité, pendant une durée s2 à partir de l'instant t1. De ce fait, l'entrée 216 du multiplicateur qui n'a pas variée est appliquée graduellement à l'entrée 72 du circuit de puissance 73.

De ce fait, le moteur 1 ; 200 est graduellement remis en fonctionnement ce qui évite de même un choc à la réactivation quand la protection thermique cesse son effet.

## Revendications

1. Dispositif de contrôle thermique d'un moteur électrique, notamment un moteur électrique générateur d'une énergie mécanique d'assistance de braquage pour un système de direction assistée de véhicule automobile, du type comprenant :

   - un circuit de pilotage (71) du moteur ;
   - un premier circuit (110) de calcul d'un température de redémarrage (Tredem) lorsque le moteur électrique (1) n'est pas en fonctionnement ;
   - un second ,circuit (111) de contrôle de la température instantanée (Tm(n)) du moteur électrique (1) lorsque celui-ci est en fonctionnement, qui comporte un circuit (75) de mesure de la valeur efficace (Ieff) du courant traversant les enroulements du moteur, qui reçoit la valeur de ladite température de redémarrage (Tredem) quand le moteur est remis en fonctionnement, et qui produit un signal d'arrêt (96) pour le circuit de pilotage (71) du moteur quand ladite température instantanée (Tm(n)) atteint une valeur maximale (Tmax) admissible, caractérisé en ce que le circuit de pilotage (71) comprend un moyen (213, 214, 217) générateur d'une gradualité (G), à réception du signal d'arrêt (96), pour effectuer une gradualité dans l'arrêt et/ou dans la remise en fonctionnement du moteur lors du changement d'état de ce signal d'arrêt (96).

2. Dispositif selon la revendication 1, caractérisé en ce que ledit signal d'arrêt (96) produit pour le circuit de pilotage (71) forme également un signal de réactivation du fonctionnement du moteur (1), le signal d'arrêt étant le passage d'un état 0 à un état 1 du signal et le signal de réactivation étant le passage de l'état 1 à l'état 0 de ce même signal.

3. Dispositif selon la revendication 1 ou 2, caractérisé en ce que le signal produit pour le circuit de pilotage (71) du moteur, est :

   - soit un signal d'arrêt (96), quand ladite température instantanée (Tm(n)) atteint la valeur maximale (Tmax) admissible ;
   - soit un signal de réactivation (212), quand ladite température instantanée (Tm(n)) atteint la température de redémarrage (Tredem) et en ce que, le générateur de gradualité (G) se met en marche à réception du signal d'arrêt (96) pour effectuer une gradualité dans l'arrêt et/ou à réception du signal de réactivation (212) pour effectuer une gradualité dans la remise en fonctionnement.

4. Dispositif selon la revendication 1, caractérisé en ce que le circuit (110) de calcul d'une température de redémarrage (Tredem) lorsque le moteur électrique (1) n'est pas en fonctionnement est activé pendant une durée prédéterminée à partir de l'arrêt du fonctionnement du moteur électrique (1), et en ce que le circuit (111) de contrôle de la température instantanée (Tm(n)) du moteur électrique (1) lorsque celui-ci est en fonctionnement est activé dès la demande de mise en fonctionnement du moteur de façon à protéger le moteur électrique dès sa mise en fonctionnement.

5. Dispositif selon l'une des revendications précédentes, caractérisé en ce que le moyen (213, 214, 217) générateur d'une gradualité du circuit de pilotage (71) comprend :

   - un circuit générateur d'un coefficient de gradualité (G) telle qu'une rampe descendante lorsqu'un signal d'arrêt (96) est reçu, ou ascendante lorsqu'un signal de redémarrage (212) est reçu ;
   - un circuit (218) générateur d'un signal de pilotage ;
   - un multiplieur (214) dont une première entrée (215) est connectée à la sortie du moyen (213) générateur d'un gradualité (G), dont une seconde entrée (216) est connectée à la sortie du circuit (218) générateur d'un signal de pilotage, et dont la sortie est connectée à l'entrée (72) d'un circuit (73) d'alimentation de puissance du moteur électrique (1).

**EP 0 550 426 B1**

**Patentansprüche**

1. Vorrichtung zur thermischen Überwachung eines Elektromotors, insbesondere eines Elektromotors, der eine mechanische Energie zur Lenkunterstützung für ein Servolenkungssystem eines Kraftfahrzeugs erzeugt, umfassend:

   - eine Steuerschaltung (71) des Motors;
   - eine erste Schaltung (110) zur Berechnung einer Wiederanlaßtemperatur (Tredem), wenn der Elektromotor (1) nicht in Betrieb ist;
   - eine zweite Schaltung (111) zur Überwachung der Momentantemperatur (Tm(n)) des Elektromotors (1), wenn dieser in Betrieb ist, die eine Schaltung (75) zur Messung des Effektivwerts (Ieff) des durch die Wicklungen des Motors fließenden Stroms umfaßt, die den Wert der besagten Wiederanlaßtemperatur (Tredem) empfängt, wenn der Motor wieder in Betrieb gesetzt wird, und die ein Abschaltsignal (96) für die Steuerschaltung (71) des Motors erzeugt, wenn die besagte Momentantemperatur (Tm(n)) einen zulässigen Höchstwert (Tmax) erreicht,**dadurch gekennzeichnet**, daß die Steuerschaltung (71) ein Mittel (213, 214, 217) zur Erzeugung einer Abstufung (G) beim Empfang des Abschaltsignals (96) umfaßt, um eine Abstufung in der Abschaltung und/oder in der Wiedereinschaltung des Motors bei der Zustandsänderung dieses Abschaltsignals (96) zu bewirken.

2. Vorrichtung nach Anspruch 1 , **dadurch gekennzeichnet**, daß das besagte für die Steuerschaltung (71) erzeugte Abschaltsignal (96) außerdem ein Signal zur Reaktivierung des Betriebs des Motors (1) bildet, wobei das Abschaltsignal der Übergang des Signals von einem Zustand 0 zu einem Zustand 1 und das Reaktivierungssignal der Übergang dieses Signals vom Zustand 1 zum Zustand 0 ist.

3. Vorrichtung nach Anspruch 1 oder 2 , **dadurch gekennzeichnet**, daß das für die Steuerschaltung (71) des Motors erzeugte Signal:

   - entweder ein Abschaltsignal (96) ist, wenn die besagte Momentantemperatur (Tm(n)) den zulässigen Höchstwert (Tmax) erreicht,
   - oder ein Reaktivierungssignal (212), wenn die besagte Momentantemperatur (Tm(n)) die Wiederanlaßtemperatur (Tredem) erreicht, und daß sich das Mittel zur Erzeugung einer Abstufung (G) beim Empfang des Abschaltsignals (96) einschaltet, um eine Abstufung in der Abschaltung zu bewirken, und/oder beim Empfang des Reaktivierungssignals (212), um eine Abstufung in der Wiedereinschaltung zu bewirken.

4. Vorrichtung nach Anspruch 1 , **dadurch gekennzeichnet**, daß die Schaltung (110) zur Berechnung einer Wiederanlaßtemperatur (Tredem), wenn der Elektromotor (1) nicht in Betrieb ist, während einer vorbestimmten Dauer ab der Abschaltung des Betriebs des Elektromotors (1) aktiviert wird und daß die Schaltung (111) zur Überwachung der Momentantemperatur (Tm(n)) des Elektromotors (1), wenn dieser in Betrieb ist, ab der Anforderung der Wiedereinschaltung des Motors aktiviert wird, um den Elektromotor ab seiner Einschaltung zu schützen.

5. Vorrichtung nach einem der vorangehenden Ansprüche, **dadurch gekennzeichnet** daß das Mittel (213, 214, 217) zur Erzeugung einer Abstufung des Steuerkreises (71) die folgenden Teile umfaßt:

   - eine Schaltung zur Erzeugung eines Abstufungskoeffizienten (G), wie einer absteigenden Rampe, wenn ein Abschaltsignal (96) empfangen wird, oder einer aufsteigenden Rampe, wenn ein Wiederanlaßsignal (212) empfangen wird;
   - eine Schaltung (218) zur Erzeugung eines Steuersignals;
   - einen Multiplikator (214), dessen erster Eingang (215) an den Ausgang des Mittels (213) zur Erzeugung einer Abstufung (G) angeschlossen ist, dessen zweiter Eingang (216) an den Ausgang der Schaltung (218) zur Erzeugung eines Steuersignals angeschlossen ist und dessen Ausgang an den Eingang (72) einer Schaltung (73) zur Leistungsversorgung des Elektromotors (1) angeschlossen ist.

**Claims**

1. Apparatus for the thermal control of an electric motor, in particular an electric motor for generating mechanical energy for assisting changes in direction, in a power assisted steering system for a motor vehicle, of the type comprising:

- a control circuit (71) for the motor;

- a first circuit (110) for computing a restarting temperature (Tredem) while the electric motor (1) is not operating;

- a second circuit (111) for controlling the instantaneous temperature (Tm(n)) of the electric motor (1) while the latter is operating, which include, for measuring the effective value (Ieff) of the current passing through the windings of the motor, a circuit (75) which receives the value of the said restarting temperature (Tredem) when the motor is restarted, and which produces a stop signal (96) for the control circuit (71) of the motor when the said instantaneous temperature (Tm(n)) reaches a maximum permissible value (Tmax),

characterised in that the control circuit (71) includes a means (213, 214, 217) for generating a graduation (G) on receipt of the stop signal (96), so as to effect graduated stopping and/or restarting of the motor during the change of state of the said stop signal (96).

2. Apparatus according to Claim 1, characterised in that the said stop signal (96) produced for the control circuit (71) also constitutes a signal for reactivating operation of the motor (1), the stop signal being the change of the signal from a 0 state to a 1 state, and the reactivation system being the change of the same signal from the 1 state to the 0 state.

3. Apparatus according to Claim 1 or Claim 2, characterised in that the signal produced for the control circuit (71) of the motor is:

- either a stop signal (96) when the said instantaneous temperature (Tm(n)) reaches the maximum permissible value (Tmax);

- or a reactivation signal (212) when the said instantaneous temperature (Tm(n)) reaches the restarting temperature (Tredem), and in that the graduation generator (G) starts operating on receipt of the stop signal (96) so as to effect graduated stopping and/or, on receipt of the reactivation signal (212), to effect graduated restarting.

4. Apparatus according to Claim 1, characterised in that the circuit (110) for computing a restarting temperature (Tredem) when the electric motor (1) is not in operation is activated during a predetermined time period starting with cessation of the operation of the electric motor (1), and in that the circuit (111) for controlling the instantaneous temperature (Tm(n)) of the electric motor (1) while the latter is operating is activated as from the demand for starting the motor, whereby to protect the electric motor once it has been put into operation.

5. Apparatus according to one of the preceding Claims, characterised in that the means (213, 214, 217) for generating a graduation in the control circuit (71) comprises:

- a circuit for generating a coefficient of graduation (G), such as a descending ramp when a stop signal (96) is received, or a rising ramp when a restarting signal (212) is received;

- a circuit (218) for generating a control signal;

- a multiplier (214), having a first input (215) connected to the output of the means (213) for generating a graduation (G), and a second input (216) connected to the output of the circuit (218) for generating a control signal, with its output being connected to the input (72) of a circuit (73) for supplying power to the electric motor (1).

EP 0 550 426 B1

FIG.1

FIG.2

FIG.3

FIG. 4

FIG. 6

FIG. 5

MICROCONTROLEUR

71 — CIRCUIT DE PILOTAGE

(A) →

70
110 — Calcul Treden
112 →
111

75 — Mesure I eff
76
74
72

Circuit de puissance
OUT1
OUT2
73

83 — I1
84

82 — Adresse de I1(TA)
79
Compar. Ieff>I1
77
78

97
85
Calcul de Ta
87
88
89
90
91
80
Clk1
81

Calcul de Tn (n)
86B
92
Clk2

114
113
93
112
94

Tn < Tmax

Tn (n)
Tn (n-1)
Z
MC
R
Tmax
95

96
(A)

**FIG. 8**

14

MICRO CONTROLEUR

CIRCUIT DE PILOTAGE

(A) 71

70

110 CALCUL DE Tredem 112

75 Mesure I eff

74 72 OUT1

CIRCUIT DE PUISSANCE

OUT2 73 1

76

97 85 87 86A 120

CALCUL DE Ta 80

115 (clk2) s CALCUL (10) de Tn (n) 92

116

(Clk1) 81

114 93 112

113 94

Tn < Tmax

Tm(n)
Tn(n-1)
B
R
Z
Tmax

111 96 95

(A)

FIG.7

+Vcc

102 107 104

109 + 103 AN

106 - 

101 105

FIG.9

V(Volts)

V_AN

FIG.10 -20 0 Ta 80 Ta(°C)

FIG.11

FIG.12

EP 0 550 426 B1

FIG.13

FIG.14

FIG.15